# EUROPEAN PATENT APPLICATION

(11) **EP 1 524 797 A1**
(43) Date of publication of application: **20.04.2005**
(21) Application number: 04255776.9
(22) Date of filing: 22.09.2004
(51) Int. Cl.: H04L 12/24, H04L 12/56

(54) **Method and system for the centralized collection of link state routing protocol data**

(30) Priority: 15.10.2003 US 687213
(71) Applicant: Agilent Technologies, Inc., Palo Alto, CA 94306 (US)
(72) Inventor: Tatman, Lance A., Fremont, CA 94536 (US); Lehane,Andrew R., Milnathort Kinross-shire KY13 9SU (GB)
(74) Representative: Exell, Jonathan Mark

(57) **Abstract**

A single probe (224) collects link state routing protocol data for two or more areas (304, 306). The areas (304, 306) may be located within one autonomous system or divided among multiple autonomous systems. Each autonomous system operates pursuant to a link state routing protocol. A router (300, 302) in each area (304, 306) is selected to share its link state routing protocol data with the probe (224). A logical connection is established between each selected router (300, 302) and the probe (224). The probe (224) will begin the process of obtaining the routing information by creating an adjacency or partial adjacency with each selected router (300, 302). The probe (224) will receive link state routing protocol data from each selected router (300, 302) once adjacency is established. Alternatively a router (300, 302) in each area (304, 306) to be monitored is selected, and the probe (224) polls the selected routers (300, 302) periodically for the appropriate SNMP MIB tables. The probe (224) decodes the MIB data to obtain the link state routing protocol data.

## Description

### Technical Field:

The invention relates generally to routing data over networks, and more particularly to link state routing protocols. Still more particularly, the invention relates to a method and system for the centralized collection of link state routing protocol data.

### Background:

Recent and ongoing innovations in decentralized networks have resulted in the increased use of routers to direct data packets over networks. This increased use has led to a need for dynamic routing techniques to help manage the traffic within networks. Dynamic routing allows routers to adapt to changing network conditions, such as the addition of new routers, slow routes due to packet congestion, and the removal of established routes. One technique for implementing dynamic routing is to have routers inform each other about the state of available routes. Link state routing protocols provide procedures for routers to dynamically exchange information regarding the topology, or routing paths, in a network.

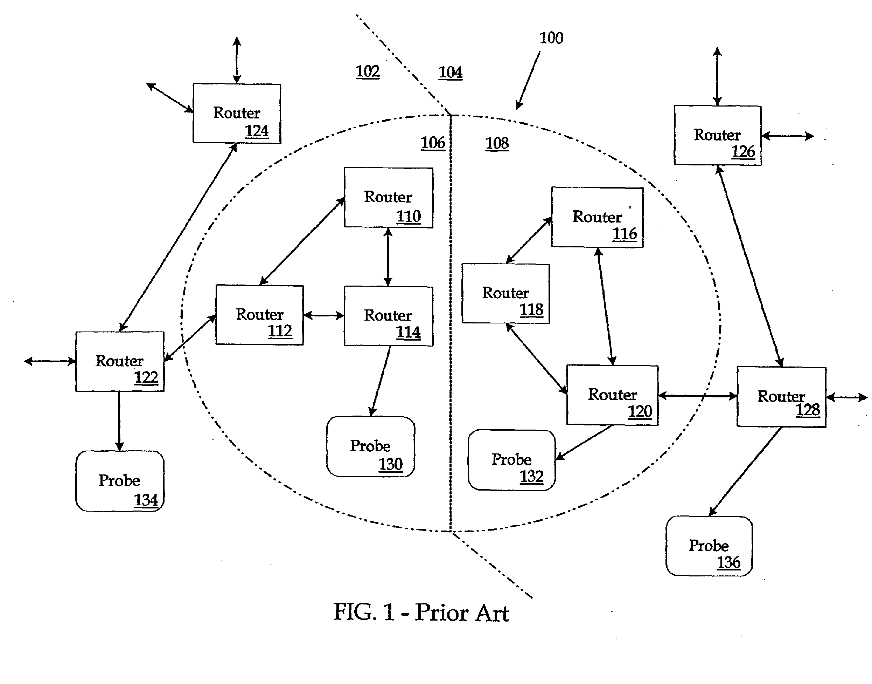

A network may include one or more discrete sub-networks. An autonomous system includes a network or set of networks operating under a single administrative domain. FIG. 1 is a diagram of one autonomous system and two partial autonomous systems according to the prior art. Autonomous system 100 and portions of two other autonomous systems 102, 104 are shown. Autonomous system 100 is divided into two areas or zones, 106, 108, both of which include three routers 110, 112, 114 and 116, 118, 120, respectively. Partial autonomous system 102 includes routers 122, 124 while partial autonomous system 104 includes routers 126, 128. Router 122 in partial autonomous system 102 connects to autonomous system 100 via router 112. And router 128 in partial autonomous system 104 connects to autonomous system 100 via router 120.

With link state routing protocols, a router contains a complete database of the state and cost of the various links, routers, and networks attached to each individual router. This information is known as the link state database and is used to generate a routing table within each router. The link state database is used to determine the optimum path to forward a data packet towards its ultimate destination. All routers belonging to the same area have identical link state databases.

To create and maintain a link state database, each router within a respective area transmits link state routing protocol data that describes the links, routers, and networks attached to that router. The data are typically flooded throughout the area whenever a change in the network configuration occurs. The link state routing protocol data are also flooded throughout the area at regular intervals to ensure that stale information is not present in the network.

In order to monitor the state of an area, a computing device, or probe, is connected to a router within each area. For example, probe 130 is connected to router 114 in area 106, and probe 132 is connected to router 120 in area 108. Probe 130 collects the link state routing protocol data transmitted throughout area 106, while probe 132 collects the link state routing protocol data transmitted throughout area 108. Each probe is able to decode the raw byte format of the link state advertisements and therefore monitor the state of the area and its links and routers. Unfortunately, as the size and complexity of networks increase, placing probes within each area can be expensive due to the costs associated with purchasing and installing new probes. Furthermore, the costs to administer security and provide maintenance for the probes escalate with each additional probe.

### Summary:

In accordance with the invention, a method and system for the centralized collection of link state routing protocol data is provided. A single probe collects link state routing protocol data for two or more areas. The areas may be located within one autonomous system or divided among multiple autonomous systems. Each autonomous system operates pursuant to a link state routing protocol. A router in each area is selected to share its link state routing protocol data with the probe. To facilitate this sharing, a logical connection is established between each selected router and the probe. The probe will begin the process of obtaining the routing information by creating an adjacency or partial adjacency with each selected router. Once the adjacency has been established, the probe will receive link state routing protocol data from each selected router whenever link state routing protocol data are flooded throughout the respective area. In another embodiment in accordance with the invention, a router in each area to be monitored is selected and a central probe periodically polls each selected router for the appropriate SNMP MIB tables. The central probe decodes the MIB data to obtain the link state routing protocol data.

### Brief Description of the Drawings:

The invention will best be understood by reference to the following detailed description of embodiments in accordance with the invention when read in conjunction with the accompanying drawings, wherein:
**FIG. 1** is a diagram of one autonomous system and two partial autonomous systems according to the prior art;
**FIG. 2** is a diagram of an autonomous system in a first embodiment in accordance with the invention;
**FIG. 3** is a diagram of two partial autonomous systems in a second embodiment in accordance with the invention;
**FIG. 4** illustrates the format of a router link advertisement packet as defined in the OSPF protocol;
**FIG. 5** is a flowchart of a method for establishing a central probe in accordance with an embodiment of the invention;
**FIG. 6** is a flowchart of a first method for establishing a central probe in accordance with the embodiment of **FIG.5**;
**FIG. 7** is a flowchart of a second method for establishing a central probe in accordance with the embodiment of **FIG. 5**;
**FIG. 8** is a flowchart of a third method for establishing a central probe in accordance with the embodiment of **FIG. 5**;
**FIG. 9** is a diagram of a central probe connected to three areas in a third embodiment in accordance with the invention; and
**FIG. 10** is a flowchart of a method for establishing a central probe in accordance with the embodiment of **FIG. 9**.

### Detailed Description:

The invention relates to a method and system for the centralized collection of link state routing protocol data. The following description is presented to enable one skilled in the art to make and use the invention, and is provided in the context of a patent application and its requirements. Various modifications to the disclosed embodiments will be readily apparent to those skilled in the art, and the generic principles herein may be applied to other embodiments. Thus, the invention is not intended to be limited to the embodiments shown, but is to be accorded the widest scope consistent with the appended claims and with the principles and features described herein.

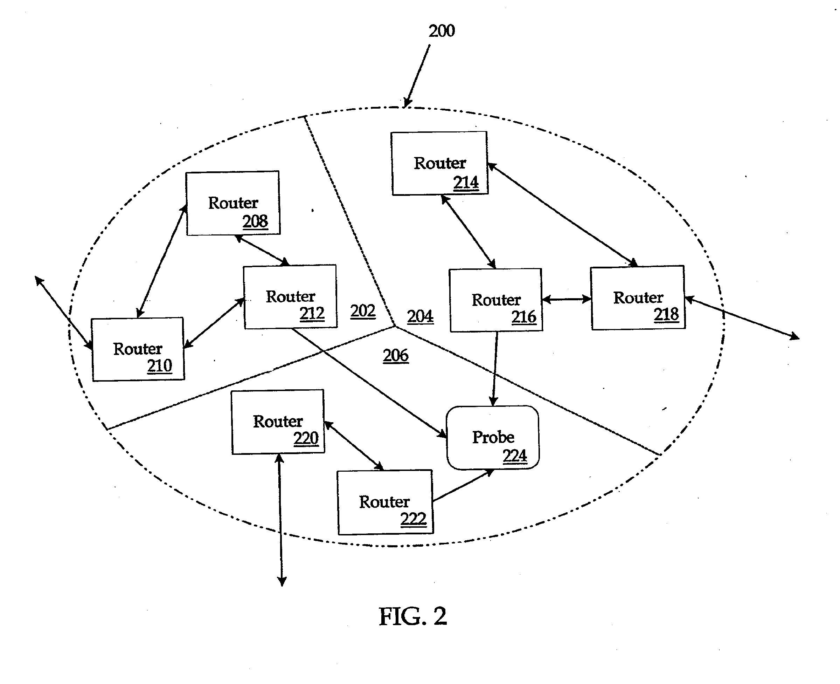

With reference now to the figures and in particular with reference to FIG. 2, there is shown a diagram of an autonomous system in a first embodiment in accordance with the invention. Autonomous system 200 is divided into three areas or zones, 202, 204, 206. Area 202 includes routers 208, 210, 212 while area 204 includes routers 214, 216, 218. Area 206 includes routers 220, 222 and one central probe 224. Embodiments in accordance with the invention, however, are not limited to autonomous systems with three areas. Autonomous systems can have any number of areas. Furthermore, embodiments in accordance with the invention are not limited to a single autonomous system and may be implemented across multiple autonomous systems as required.

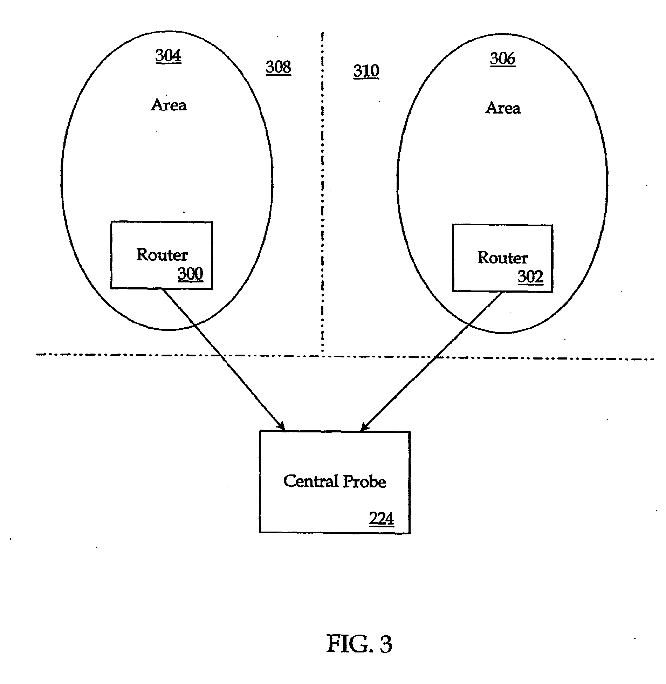

Central probe 224 is connected to routers 212, 216, 222 in areas 202, 204, 206, respectively. Central probe 224 monitors areas 202, 204, 206 for link state routing protocol data. In this embodiment in accordance with the invention, central probe 224 monitors the state of only one autonomous system. Embodiments in accordance with the invention, however, are not limited to this configuration. **FIG. 3** is a diagram of two partial autonomous systems in a second embodiment in accordance with the invention. In this embodiment, central probe 224 is connected to routers 300, 302 within areas 304, 306, respectively, to obtain link state routing protocol data for each area. Area 304 is within autonomous system 308 while area 306 is located within autonomous system 310. A single probe may be used to monitor any number of autonomous systems, or areas within multiple autonomous systems, in other embodiments in accordance with the invention.

Central probe 224 is a computing device capable of supporting the link state routing protocol in autonomous system 200. In this embodiment in accordance with the invention, the link state routing protocol is OSPF (Open Shortest Path First). Other embodiments in accordance with the invention, however, may utilize other link state routing protocols, such as, for example, IS-IS (Intermediate System-Intermediate System).

Each router within an area is responsible for maintaining a link state database that describes the topology of that area. On start up, a router is only aware of its connected interfaces and networks (i.e., its own local state) in accordance with information that is pre-configured by the router's administrator. The process of learning and distributing further network state information, such as connectivity, is achieved by exchanging with other routers within the autonomous system link state routing protocol data defined by the OSPF protocol.

Initially "adjacencies" are formed with neighboring routers using, for example, packet multicast techniques. An adjacency is a relationship formed with each of a router's active neighbors for the purpose of exchanging routing information. Once an adjacency has been formed the adjacent routers exchange information about their state using OSPF link state advertisement packets. This process continues until all routers share a common view of the topology of their autonomous system, thereby building a link state database in each router.

When the adjacency forming process is completed throughout the autonomous system, each router executes Dijkstra's algorithm in conjunction with its own copy of the link state database to construct a unique routing table that includes a tree of least-cost paths with itself as the root of that tree. After the initial generation of its link state database and routing table, each router repeats the information exchange and route calculation process if a change in its area occurs. A change may involve the addition of a link or router, the removal of a link or router, or a change in a link's costs. To avoid having the link state database become stale, the packets are, in the absence of new updates, re-broadcast periodically. Each type of link state advertisement packet describes a different element within the autonomous system.

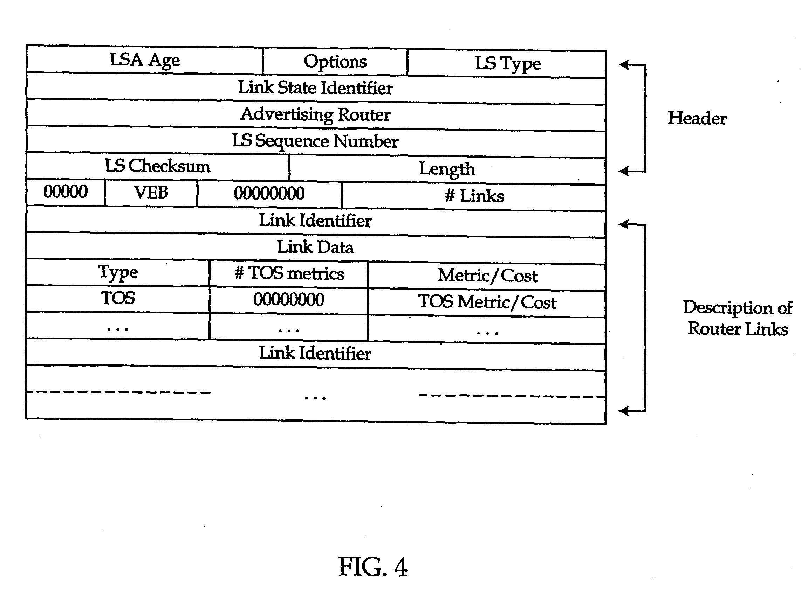

The OSPF protocol defines five different link state advertisement packets. A router link advertisement, a network link advertisement, two types of summary link advertisements, and an autonomous system external link advertisement form the five types of OSPF link state advertisements. FIG. 4 illustrates the format of a router link advertisement. Router link advertisements are transmitted and received by all of the routers within an area. The router link advertisement, known as a Type 1 advertisement, includes a header and a collection of fields that describe the links, routers, and networks attached to the router sending the packet.

A network link advertisement (Type 2) includes information regarding the set of routers attached to a network. The summary link advertisements (Type 3 and Type 4) include a description of the inter-area routes and enable the abbreviation of routing information at the area borders. The Type 3 advertisement describes the routes to networks, while the type 4 advertisement describes the routes to routers along the boundaries of the autonomous system. And finally, the autonomous system external link advertisements (Type 5) include information relating to the routes to destinations external to an autonomous system.

A link state database for an area includes a collection of the various link state advertisements. And, as noted earlier, these advertisements are typically flooded throughout an autonomous system whenever a change in the network configuration occurs. The advertisements are also transmitted at regular time intervals to ensure that stale information is not present in the network.

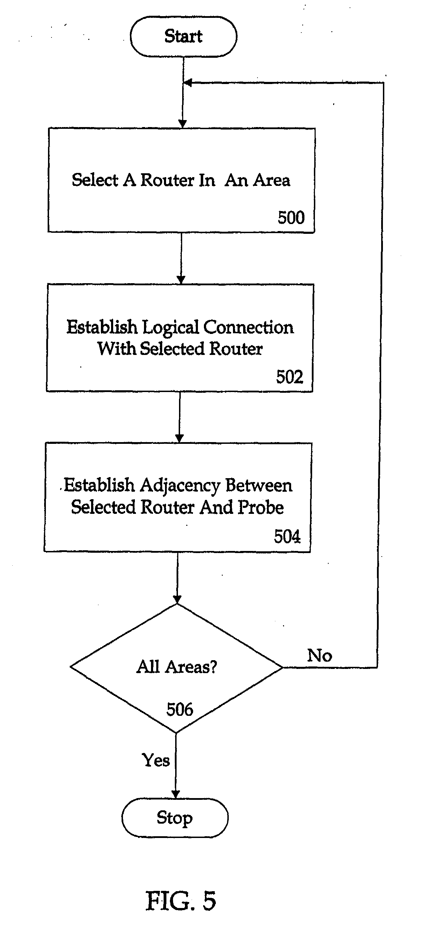

Referring now to FIG. 5, there is shown a flowchart of a method for establishing a central probe in accordance with an embodiment of the invention. A router in an area is selected to be the router that will transmit the link state routing protocol data, such as advertisements, to the probe (block 500). A logical connection is then established at block 502 between the selected router and the probe. An adjacency is created between the selected router and the probe, which causes the probe to appear to be a neighboring router. This step is illustrated in block 504. The adjacency allows the probe to receive the link state advertisements for the area. A determination is then made at block 506 as to whether the probe is logically connected to all of the areas to be monitored. If not, the process returns to block 400 and repeats until the probe is connected to a router in each area to be monitored. As discussed earlier, the areas may be included in one or more autonomous systems.

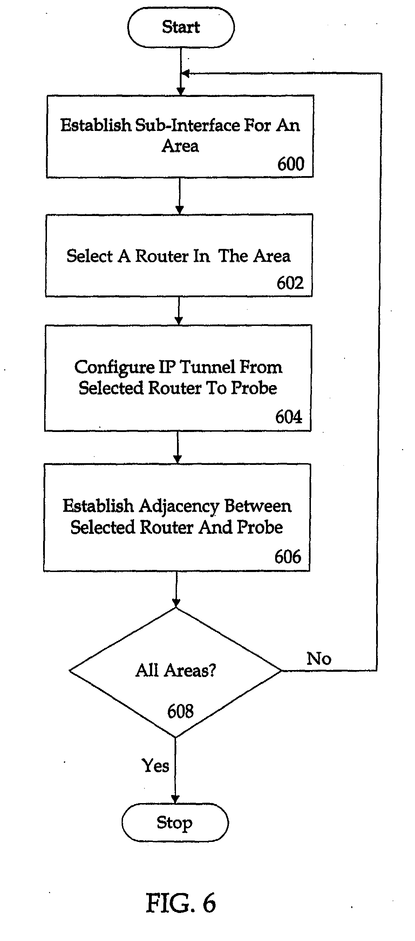

**FIG. 6** is a flowchart of a first method for establishing a central probe in accordance with the embodiment of **FIG. 5**. Initially the network interface on the central probe is configured with a sub-interface for an area to be monitored (block 600). The IP address of the sub-interface will be in an IP network address block allocated to the connected sub-network within the area being monitored. Each area that the central probe monitors will have a separate sub-interface in the **FIG. 5** embodiment in order to maintain discrete link state databases for each area.

A router in the area is selected to be the router that will transmit the link state advertisements to the central probe, as shown in block 602. An IP (Internet Protocol) tunnel is then configured from an interface on the selected router to a respective sub-interface on the central probe (block 604). This establishes a logical connection between the selected router and the central probe. An adjacency is then established between the selected router and the probe, as shown in block 606. Once the adjacency is established, the probe appears to be a neighboring router to the selected router. The probe offers a single host route in this embodiment in accordance with the invention, thereby allowing the central probe to receive the link state advertisements for the area.

A determination is then made at block 608 as to whether the probe is logically connected to all of the areas to be monitored. If not, the process returns to block 600 and repeats until the central probe is connected to a router in each area to be monitored. When the central probe is connected to all of the areas to be monitored, the probe will receive the flooded link advertisements from each area.

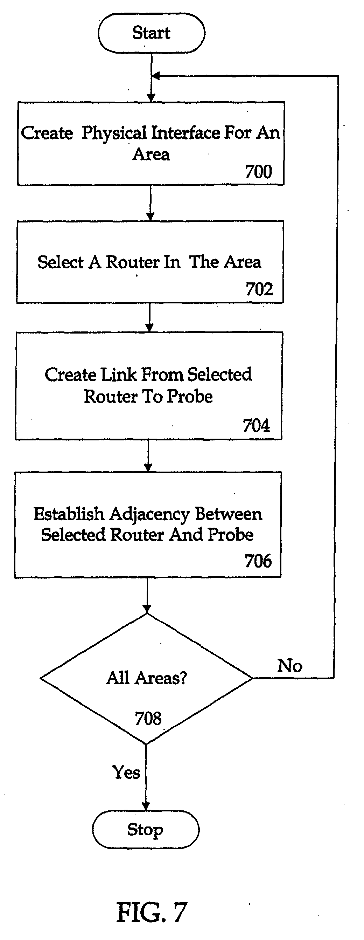

Referring now to FIG. 7, there is shown a flowchart of a second method for establishing a central probe in accordance with the embodiment of **FIG. 5**. Initially a physical interface for an area to be monitored is created on the probe (block 700). Each area that the central probe monitors has a separate physical interface on the central probe in order to maintain discrete link state databases for each area.

A router in an area is then selected to be the router that will transmit the link state advertisements to the central probe, as shown in block 702. A link is created from the selected router to the central probe (block 704). This establishes a logical connection between the selected router and the central probe. An adjacency is then established between the respective router and the central probe, as shown in block 706. Once the adjacency is established, the probe appears to be a neighboring router to the selected router, thereby allowing the central probe to receive the link state advertisements for the area.

A determination is then made at block 708 as to whether the probe is logically connected to all of the areas to be monitored. If not, the process returns to block 700 and repeats until the central probe is connected to a router in each area to be monitored. When the central probe is connected to all of the areas to be monitored, the probe will receive the flooded link advertisements from each area.

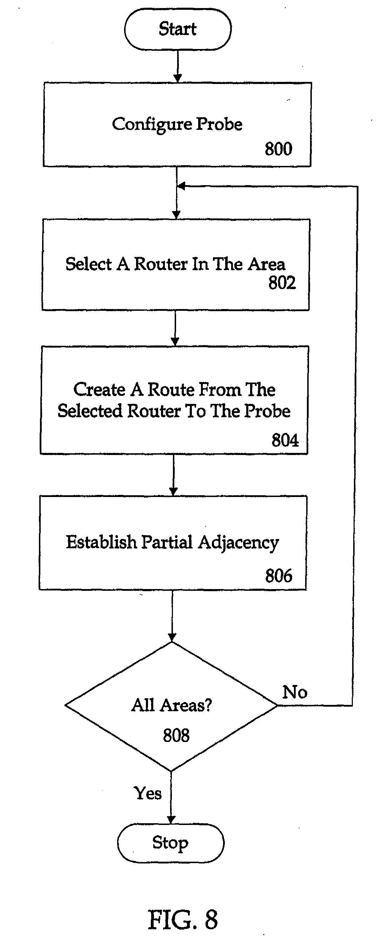

**FIG. 8** is a flowchart of a third method for establishing a central probe in accordance with the embodiment of **FIG. 5.** A central probe is configured to not transmit any link state advertisements or information regarding its link state database, as shown in block 800. The probe does transmit Hello commands, Link State Requests, and Link State Acknowledgements in this embodiment in accordance with the invention. Thus, the probe is able to establish an adjacency between a selected router and itself in order to receive the link state advertisements, but the probe is not able to transmit any link state advertisements or output any of its own Database Description or Link State Update packets. The probe therefore, establishes a one-way adjacency, or partial adjacency, with the selected router. The partial adjacency allows the probe to receive link state routing protocol data in a non-intrusive manner.

A router in the area to be monitored is selected to be the router that will transmit the link state advertisements to the central probe, as shown in block 802. A route is created from the selected router to the central probe (block 804). This establishes a logical connection between the selected router and the central probe. A partial adjacency is then established between the respective router and the central probe, as shown in block 806. Once the partial adjacency is established, the probe receives the link state advertisements for the area.

A determination is then made at block 808 as to whether the probe is logically connected to all of the areas to be monitored. If not, the process returns to block 802 and repeats until the central probe is connected to a router in each area to be monitored. When the central probe is connected to all of the areas to be monitored, the probe will receive the flooded link advertisements from each area.

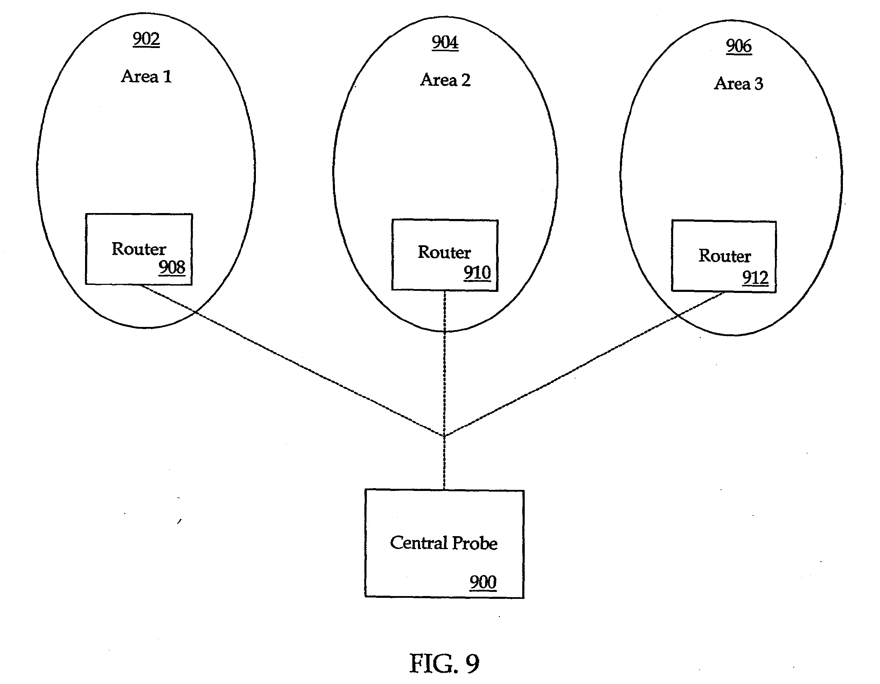

Referring now to **FIG. 9**, there is shown a diagram of a central probe connected to three areas in a third embodiment in accordance with the invention. Areas 902, 904, 906 utilize the link state routing protocol OSPF in the **FIG. 9** embodiment. Different link state routing protocols, such as IS-IS, may be used in other embodiments in accordance with the invention.

Routers 908, 910, 912 within areas 902, 904, 906, respectively, are connected to probe 900. Central probe 900 collects the link state routing protocol data from routers 908, 910, 912. Link state routing protocols such as OSPF typically include SNMP (Simple Network Management Protocol), a protocol that facilitates the exchange of information between network devices. SNMP commands are utilized in this embodiment in accordance with the invention to obtain the SNMP MIB tables (Management Information Base). A MIB is a collection of information that is organized hierarchically. The MIB tables obtained in the **FIG. 9** embodiment include a complete and current description of the link state packets.

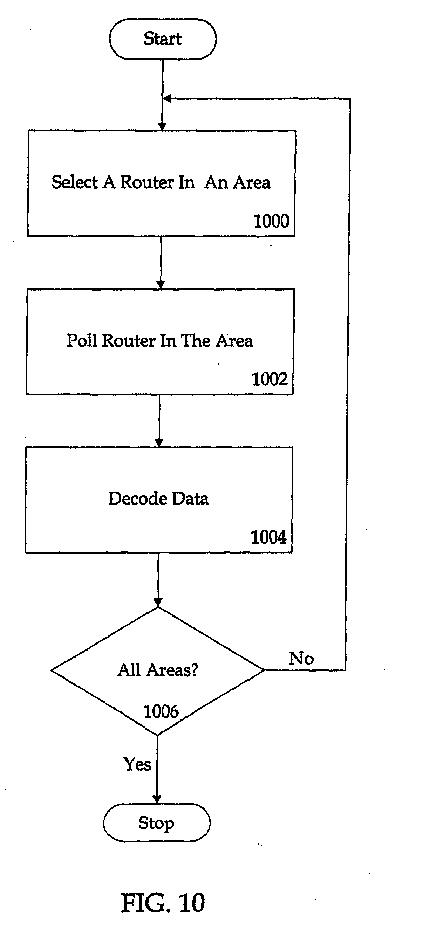

**FIG. 10** is a flowchart of a method for establishing a central probe in accordance with the embodiment of **FIG. 9**. A router in an area to be monitored is selected, as shown in block 1000. The central probe polls the selected router for the appropriate SNMP MIB tables (block 1002). In this embodiment in accordance with the invention, the "table get" command is used to obtain the SNMP MIB tables. The probe then decodes the MIB data, which is typically provided in raw byte format, to obtain the link state routing protocol data (block 1004). A determination is then made at block 1006 as to whether all of the areas to be monitored have been polled. If not, the process returns to block 1000 and repeats until all of the areas have been accessed.

## Claims

1. A system for monitoring link state routing protocol data, comprising:
two or more areas (304, 306) to be monitored, wherein each area (304, 306) includes a router (300,302); and
a probe (224) logically connected to the router (300, 302) in each area (304, 306) and configured to receive link state routing protocol from the router (300, 302) in each area (304, 306).

2. The system of claim 1, wherein the probe (224) receives link state routing protocol data when the router (300, 302) in each area (304, 306) floods the link state routing protocol data throughout an autonomous system.

3. The system of claim 1, wherein the probe (224) receives link state routing protocol data when the probe (224) polls the router (300, 302) in each area (304,306).

4. The system of any one of claims 1-3, wherein the two or more areas (304, 306) are included in a single autonomous system.

5. The system of any one of claims 1-3, wherein at least one area (304) to be monitored is included in a first autonomous system and at least one area (306) to be monitored is included in a second autonomous system.

6. A method for the centralized collection of link state routing protocol data, comprising:
selecting a router (300, 302) in an area to collect the link state routing protocol data from, wherein the link state routing protocol data is collected from two or more areas (304, 306);
establishing a logical connection with the selected router (300, 302) in each area (304, 306); and
creating a connection between the selected router (300, 302) in each area (304, 306) and a probe (224) to allow the probe (224) to receive the link state routing protocol data from the selected router (300, 302) in each area (304,306).

7. The method of claim 6, wherein creating a connection between each selected router (300, 302) and a probe (224) comprises:
establishing an adjacency between each selected router (300, 302) and the probe (224).

8. The method of claim 6, wherein creating a connection between each selected router (300,302) and a probe (224) comprises:
establishing a partial adjacency between each selected router (300, 302) and the probe (224), wherein the probe (224) only receives link state routing protocol data.

9. The method of claim 6, wherein creating a connection between the selected router (300, 302) in each area (304, 306) and a probe (224) to allow the probe (224) to receive the link state routing protocol data from the selected router (300, 302) in each area (304, 306) comprises:
creating a route between the selected router (300, 302) in each area (304, 306) and a probe (224) to allow the probe (224) to receive the link state routing protocol data from the selected router (300, 302) in each area (304, 306).

10. The method of claim 9, wherein the route between the selected router (300, 302) in each area (304, 306) and the probe (224) comprises a single host route.
